(19) Europäisches Patentamt
European Patent Office
Office européen des brevets

(11) **EP 4 354 291 A1**

(12) **EUROPEAN PATENT APPLICATION**
published in accordance with Art. 153(4) EPC

(43) Date of publication:
**17.04.2024 Bulletin 2024/16**

(21) Application number: **22823985.1**

(22) Date of filing: **17.05.2022**

(51) International Patent Classification (IPC):
**G06F 9/50** $^{(2006.01)}$    **H04L 49/90** $^{(2022.01)}$

(52) Cooperative Patent Classification (CPC):
**G06F 9/46; G06F 9/50; H04L 49/90**

(86) International application number:
**PCT/CN2022/093194**

(87) International publication number:
**WO 2022/262503 (22.12.2022 Gazette 2022/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.06.2021  CN 202110661538
30.08.2021  CN 202111007559**

(71) Applicant: **Huawei Technologies Co., Ltd.
Shenzhen, Guangdong 518129 (CN)**

(72) Inventors:
• **SUN, Hongwei**
  **Shenzhen, Guangdong 518129 (CN)**
• **LI, Guangcheng**
  **Shenzhen, Guangdong 518129 (CN)**
• **LI, Xiuqiao**
  **Shenzhen, Guangdong 518129 (CN)**
• **BAO, Xiaoming**
  **Shenzhen, Guangdong 518129 (CN)**
• **YOU, Jun**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **MEMORY POOLING METHOD AND RELATED APPARATUS**

(57)    Embodiments of this application disclose memory pooling and a related apparatus, to improve performance of a distributed application. A method in embodiments of this application includes: A server cluster determines a first memory requirement of a first distributed application, where the first memory requirement indicates a memory size. The server cluster determines N first server nodes in the server cluster based on the first memory requirement and an available memory resource of each server node in the server cluster, and constructs a first memory pool based on the N first server nodes. The server cluster provides a service for the first distributed application based on the first memory pool.

FIG. 2a

EP 4 354 291 A1

## Description

This application claims priority to Chinese Patent Application No. 202111007559.3, filed with the China National Intellectual Property Administration on August 30, 2021 and entitled "MEMORY POOLING METHOD AND RELATED APPARATUS", and claims priority to Chinese Patent Application No. 202110661538.7, filed with the China National Intellectual Property Administration on June 15, 2021 and entitled "MEMORY POOL MANAGEMENT METHOD, APPARATUS, AND SYSTEM", which are incorporated herein by reference in their entireties.

## TECHNICAL FIELD

Embodiments of this application relate to the field of computers, and in particular, to a memory pooling method and a related apparatus.

## BACKGROUND

A server cluster is a group of servers connected together to jointly implement a task. A distributed application may be deployed on a plurality of servers in the server cluster, to support running of the distributed application.

However, performance of the distributed application is still not satisfactory and needs to be further improved.

## SUMMARY

Embodiments of this application provide a memory pooling method and a related apparatus.

A first aspect of embodiments of this application provides a memory pooling method.

When a first distributed application needs to be run in a server cluster, a first memory requirement of the first distributed application is determined, where the first memory requirement indicates a memory size. Each server node in the server cluster has an available memory resource, and after the first memory requirement is determined, N first server nodes in the server cluster are determined based on the first memory requirement and the available memory resource of each server node in the server cluster, where N is an integer greater than or equal to 2. After the N first server nodes are determined, a first memory pool is constructed based on the N first server nodes. Then the server cluster provides a service for the first distributed application based on the first memory pool.

In embodiments of this application, a service is provided for an application by constructing a memory pool in a server cluster. Because data may be transmitted in the memory pool through remote direct memory access, workload of a central processing unit of a server node is reduced. Therefore, performance of a distributed application can be improved. In addition, as a quantity of running distributed applications increases, a size of the memory pool in the server cluster also increases.

In a possible implementation, a type of the first distributed application may further be determined. Then, the N first server nodes in the server cluster are determined based on the type of the first distributed application, the first memory requirement, and the available memory resource of each server node.

In a possible implementation, a memory ballooning coefficient corresponding to the type of the first distributed application is determined based on the type of the first distributed application. Then, the N first server nodes in the server cluster are determined based on the memory ballooning coefficient, the first memory requirement, and the available memory resource of each server node.

In embodiments of this application, the N first server nodes may be further determined based on the type of the distributed application, to improve accuracy of selecting a quantity of server nodes.

In a possible implementation, when a second distributed application further needs to be run in the server cluster, a second memory requirement of the second distributed application and a type of the second distributed application may be determined. If a difference between the second memory requirement and the first memory requirement is less than a preset value and the type of the first distributed application is the same as the type of the second distributed application, services are provided for the first distributed application and the second distributed application respectively in different time periods based on the first memory pool.

In embodiments of this application, when the memory requirements of the two distributed applications are less than the preset value and the types of the two distributed applications are the same, one memory pool may be directly reused, and no new memory pool needs to be constructed.

A second aspect of embodiments of this application provides a server cluster. The server cluster includes corresponding functional units configured to implement the method in the first aspect.

A third aspect of embodiments of this application provides a server cluster. The server cluster includes a processor. The processor is coupled to a memory. The memory is configured to store instructions. When the instructions are executed by the processor, the server cluster is enabled to perform the method in the first aspect.

A fourth aspect of embodiments of this application provides a computer-readable storage medium. The computer-readable storage medium is configured to store instructions. The instructions are used to perform the method in the first aspect.

## BRIEF DESCRIPTION OF DRAWINGS

FIG. 1 is a schematic diagram of an application scenario of a memory pooling method according to an embodiment of this application;

FIG. 2a is a schematic flowchart of a memory pooling method according to an embodiment of this application;

FIG. 2b is a schematic diagram of constructing a first memory pool according to an embodiment of this application;

FIG. 3 is a schematic diagram of constructing a second memory pool according to an embodiment of this application;

FIG. 4 is another schematic flowchart of a memory pooling method according to an embodiment of this application;

FIG. 5 is another schematic flowchart of a memory pooling method according to an embodiment of this application;

FIG. 6 is a schematic structural diagram of a server cluster according to an embodiment of this application; and

FIG. 7 is another schematic structural diagram of a server cluster according to an embodiment of this application.

## DESCRIPTION OF EMBODIMENTS

In the specification, claims, and accompanying drawings of this application, the terms "first", "second", and the like are intended to distinguish between similar objects but do not necessarily indicate a particular order or sequence. It should be understood that data termed in such a way are interchangeable in proper cases so that embodiments described herein can be implemented in other orders than the order illustrated or described herein. In addition, the terms "include" and "have" and any other variants thereof are intended to cover a non-exclusive inclusion. For example, a process, method, system, product, or device that includes a list of steps or units is not limited to those expressly listed steps or units, but may include other steps or units not expressly listed or inherent to such a process, method, product, or device.

Embodiments of this application provide a memory pooling method, to improve performance of a distributed application.

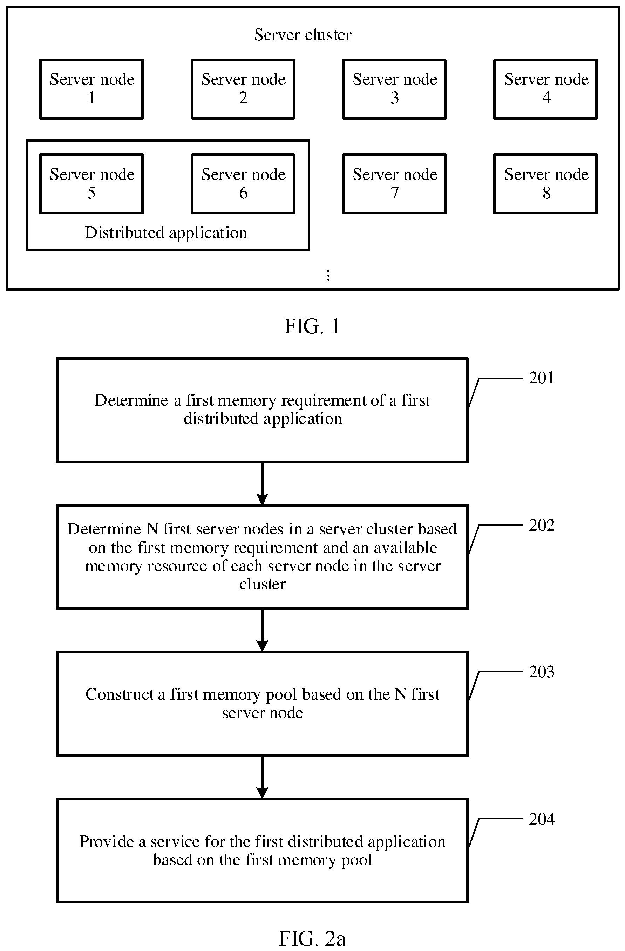

Embodiments of this application may be applied to a server cluster shown in FIG. 1. As shown in FIG. 1, the server cluster includes a plurality of server nodes interconnected by a network, and the server nodes closely cooperate with each other to implement a task. For a user, the server cluster as a whole may be considered as a server. A distributed application is an application that runs based on different server nodes in the server cluster. For example, a distributed application is deployed on a server node 5 and a server node 6, and the server node 5 and the server node 6 jointly support running of the distributed application. However, in conventional technologies, because data transmission between server nodes needs to consume a large quantity of processing capabilities of a central processing unit, performance of the distributed application is limited to some extent. Consequently, the performance of the distributed application cannot meet a requirement.

Refer to FIG. 2a. A memory pooling method in an embodiment of this application is described below.

201: Determine a first memory requirement of a first distributed application.

When a user needs to run the first distributed application in a server cluster, the server cluster first needs to determine the first memory requirement required for running the first distributed application. Different applications usually have different memory requirements. For example, an application 1 requires a memory resource of 1 T, an application 2 requires a memory resource of 4 T, and an application 3 requires a memory resource of 5 T. In this embodiment, an example in which the first distributed application requires a memory resource of 1 T is used for description.

202: Determine N first server nodes in the server cluster based on the first memory requirement and an available memory resource of each server node in the server cluster.

Each server node in the server cluster has an available memory resource. After determining the first memory requirement of the first distributed application, the server cluster determines the N first server nodes in the server cluster based on the available memory resource of each server node in the server cluster and the first memory requirement. A sum of the available memory resources of the N first server nodes meets the first memory requirement.

In a preferred manner, the server nodes in the server cluster have approximately the same available memory resource. For example, the available memory resource of each server node is 0.2 T. In this case, a required quantity N of server nodes may be determined based on the first memory requirement D and the available memory resource M of each server node, where N satisfies Formula (1):

$$N = \frac{D}{M} \quad (1)$$

The foregoing data is used as an example. When D is 1 T and M is 0.2 T, N is 5. To be specific, five server nodes need to be selected from the server cluster to provide a service for the first distributed application, and these server nodes are the first server nodes.

It should be noted that in an actual implementation, if N obtained through calculation based on Formula (1) is not an integer, a ceiling method may be used. For example, when an obtained result of N is 5.3, N takes a value of 6.

203: Construct a first memory pool based on the N first server nodes.

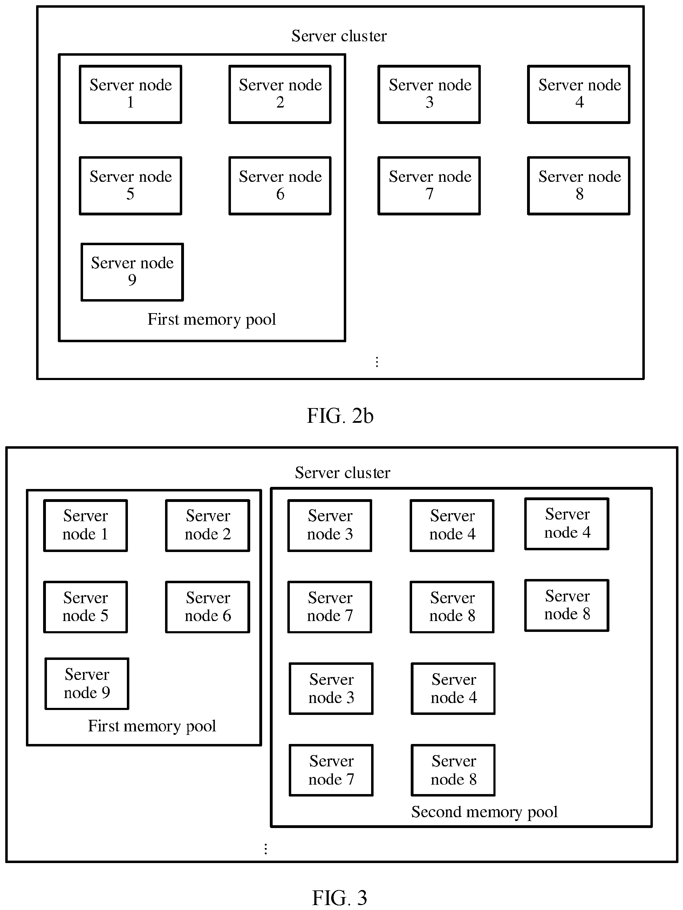

For example, refer to FIG. 2b. After five first server nodes are determined, the first memory pool is constructed based on the five first server nodes.

204: Provide a service for the first distributed application based on the first memory pool.

After the first memory pool is constructed, the service is provided for the first distributed application based on the first memory pool.

Certainly, in addition to the first distributed application, another distributed application also needs to run in the server cluster, and a memory pool may be constructed for the another distributed application based on the foregoing method. For example, a memory requirement of a distributed application A is 2 T. Refer to FIG. 3. According to the foregoing method, it may be determined that 10 second server nodes need to be selected from the server cluster to construct a second memory pool, and a service is provided for the distributed application A based on the second memory pool.

It may be understood that in an actual implementation, a process of determining the N server nodes based on the memory requirement of the application and the available memory resource of each server node may be performed in advance, in other words, a mapping relationship between the memory requirement of the application and a quantity of server nodes required for constructing the memory pool may be determined in advance. For example, when the memory requirement of the application is 4 T, it is determined that a memory pool constructed by 20 server nodes is required to provide a service for the application. When the memory requirement of the application is 5 T, it is determined that a memory pool constructed by 25 server nodes is required to provide a service for the application. After such a mapping relationship is determined, when an application having a memory requirement of 5 T or 4 T needs to be run, a quantity of server nodes required for constructing a memory pool that provides a service for the application may be directly determined based on the mapping relationship.

In embodiments of this application, a service is provided for an application by constructing a memory pool in a server cluster. Because data may be transmitted in the memory pool through remote direct memory access, workload of a central processing unit of a server node is reduced. Therefore, performance of a distributed application can be improved. In addition, as a quantity of running distributed applications increases, a size of the memory pool in the server cluster also increases.

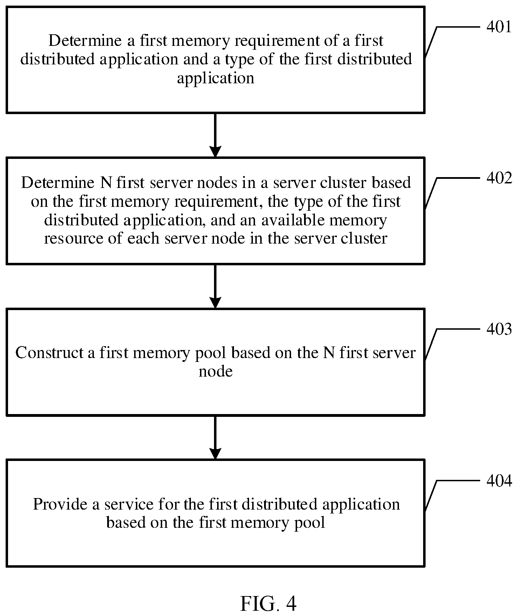

Based on the embodiment shown in FIG. 2a, a quantity of server nodes required for constructing a memory pool that provides a service for an application may be further determined based on a type of the application. Refer to FIG. 4. A detailed description is given below.

401: Determine a first memory requirement of a first distributed application and a type of the first distributed application.

Based on characteristics of distributed applications, distributed applications may be classified into different types, for example, a database application and a big data application. Due to impact of the characteristics of the distributed applications, a server cluster also needs to consider the type of the first distributed application when determining a quantity of server nodes required for creating a first memory pool that provides a service for the first distributed application. For example, in this embodiment, the type of the first distributed application is a database application, and a memory requirement of the first distributed application is 1 T.

402: Determine N first server nodes in the server cluster based on the first memory requirement, the type of the first distributed application, and an available memory resource of each server node in the server cluster.

In this embodiment, different application types correspond to different memory ballooning coefficients. For example, a database application corresponds to a memory ballooning coefficient of 1, and a big data application corresponds to a memory ballooning coefficient of 2. First, a corresponding ballooning coefficient is determined based on the type of the first distributed application. Then the N first server nodes in the server cluster are determined based on the ballooning coefficient, the first memory requirement of the first distributed application, and the available memory resource of each server node in the server cluster.

For example, when the first distributed application is a database application, the corresponding memory ballooning coefficient P is 1.2. In this case, a quantity N of server nodes is required, where N satisfies Formula (2):

$$N = \frac{D \times P}{M} \quad (2)$$

For example, if M is 0.2, D is IT, and P is 1.2, N is 6.

Steps 403 to 404 in this embodiment are similar to steps 203 to 204 in the embodiment shown in FIG. 2a. Details are not described herein again. To be specific, six server nodes need to be selected from the server cluster to provide a service for the first distributed application, and these server nodes are the first server nodes.

Certainly, in addition to determining the memory ballooning coefficient based on the type of the distributed application, an algorithm for calculating a quantity of server nodes required for constructing a memory pool may be correspondingly improved based on the type of the distributed application. A specific improvement manner is not specifically limited herein.

In embodiments of this application, the N first server nodes may be further determined based on the type of the distributed application, to improve accuracy of selecting a quantity of server nodes.

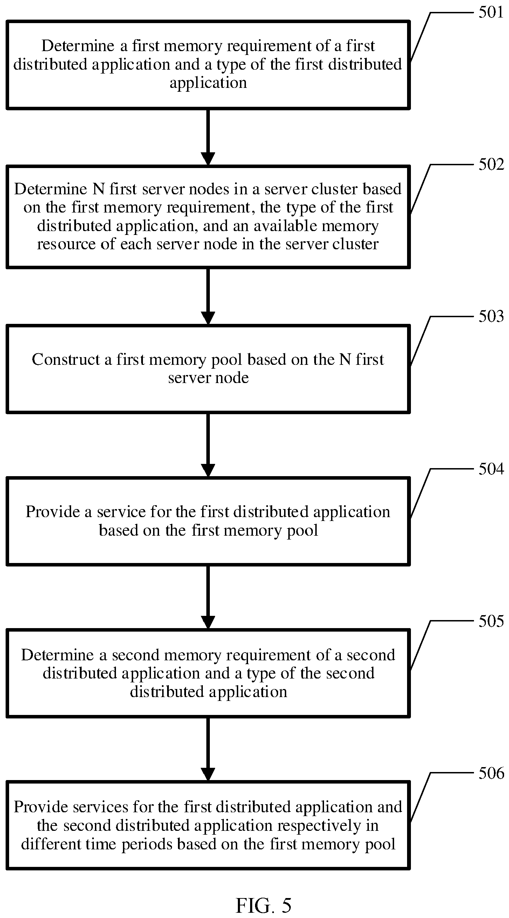

Alternatively, in an actual implementation, when a distributed application to be run later has a similar memory resource requirement to that of the distributed application that is currently being run and the two distributed applications are of the same type, one memory pool may be reused for the two distributed applications. Refer to FIG. 5. A detailed description is given below.

Steps 501 to 504 in this embodiment are similar to steps 401 to 404 in the embodiment shown in FIG. 4. Details are not described herein again.

505: Determine a second memory requirement of a second distributed application and a type of the second distributed application.

If the second distributed application further needs to be run in the server cluster, the second memory requirement of the second distributed application and the type of the second distributed application are determined. For example, the second memory requirement is 1.02 T, and the type of the second distributed application is a database application.

506: Provide services for the first distributed application and the second distributed application respectively in different time periods based on the first memory pool.

The first memory requirement of the first distributed application is 1 T, and the second memory requirement of the second distributed application is 1.02 T. In an actual implementation, a preset value may be set. When a difference between the memory requirements of the two distributed applications is less than the preset value, it indicates that the memory requirements of the two distributed applications are close. For example, when the preset value is 0.01 T, it indicates that the memory requirements of the first distributed application and the second distributed application are close.

Provided that the memory requirements of the two distributed applications are close, if the two distributed applications are also of the same type, for example, if both the first distributed application and the second distributed application are database applications, one memory pool may be reused for the two distributed applications. Specifically, the first memory pool may be used to provide services for the first distributed application and the second distributed application respectively in different time periods. For example, the first memory pool is used to provide the service for the first distributed application in a time period 1, and the first memory pool is used to provide the service for the second distributed application in a time period 2. Therefore, no new memory pool needs to be constructed for the second distributed application.

Certainly, if the difference between the second memory requirement of the second distributed application and the first memory requirement is greater than the preset value or the type of the second distributed application is different from that of the first distributed application, a new memory pool is constructed for the second distributed application. A specific construction process is similar to the process of constructing the memory pool for the first distributed application, and details are not described herein again.

In embodiments of this application, when the memory requirements of the two distributed applications are less than the preset value and the types of the two distributed applications are the same, one memory pool may be directly reused, and no new memory pool needs to be constructed.

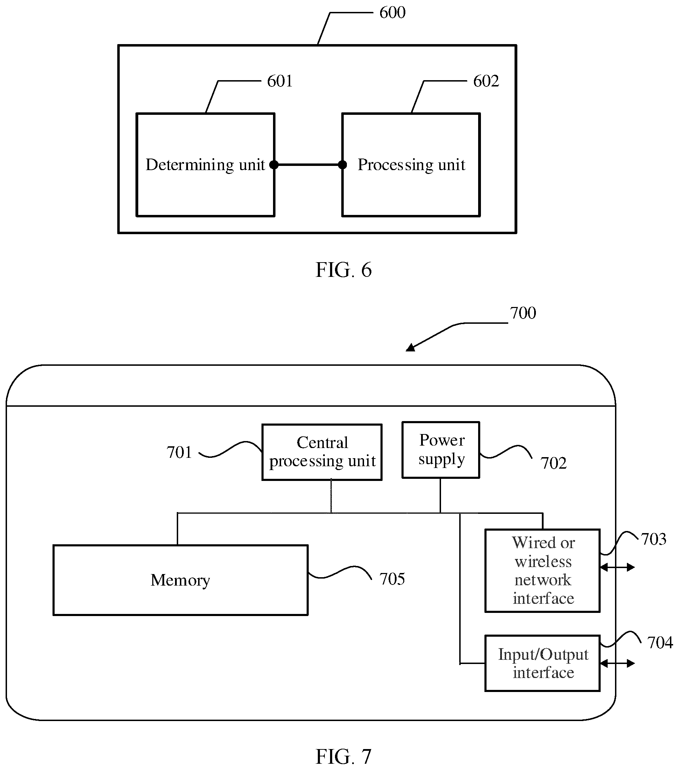

The foregoing describes the memory pooling method in embodiments of this application. Refer to FIG. 6. The following describes a server cluster in embodiments of this application.

As shown in FIG. 6, a server cluster 600 in an embodiment of this application includes a determining unit 601 and a processing unit 602.

The determining unit 601 is configured to determine a first memory requirement of a first distributed application, where the first memory requirement indicates a memory size.

The determining unit 601 is further configured to determine N server nodes in the server cluster based on the first memory requirement and an available memory resource of each server node in the server cluster, where N is an integer greater than or equal to 2.

The processing unit 602 is configured to construct a first memory pool based on the N first server nodes.

The processing unit 602 is further configured to provide a service for the first distributed application based on the first memory pool.

In a possible implementation, the determining unit 601 is further configured to determine a type of the first distributed application.

The determining unit 601 is specifically configured to determine the N first server nodes in the server cluster based on the first memory requirement, the type of the first distributed application, and the available memory resource of each node in the server cluster.

In a possible implementation, the determining unit 601 is specifically configured to determine, based on the type of the first distributed application, a memory ballooning coefficient corresponding to the first distributed application.

The determining unit 601 is specifically configured to determine the N first server nodes in the server cluster based on the first memory requirement, the memory ballooning coefficient corresponding to the first distributed application, and the available memory resource of each server node in the server cluster.

In a possible implementation, the determining unit 601 is further configured to determine a second memory requirement of a second distributed application and a type of the second distributed application.

The processing unit 602 is further configured to provide services for the second distributed application and the first distributed application respectively in different time periods based on the first memory pool when a difference between the second memory requirement and the first memory requirement is less than a preset value and the type of the first distributed application is the same as the type of the second distributed application.

FIG. 7 is a schematic structural diagram of a server cluster according to an embodiment of this application. The server cluster 700 may include one or more central processing units (central processing units, CPUs) 701 and a memory 705. The memory 705 stores one or more applications or data.

The memory 705 may be a volatile storage or a persistent storage. The application stored in the memory 705 may include one or more modules, and each module may include a series of instruction operations for a server. Further, the central processing unit 701 may be configured to communicate with the memory 705, and execute, on a server node 700, the series of instruction operations in the memory 705.

The server cluster 700 may further include one or more power supplies 702, one or more wired or wireless network interfaces 703, one or more input/output interfaces 704, and/or one or more operating systems, such as Windows ServerTM, Mac OS XTM, UnixTM, LinuxTM, and FreeBSDTM.

The central processing unit 701 may perform the methods in the embodiments shown in FIG. 2a, FIG. 4, and FIG. 5, and details are not described herein again.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to conventional technologies, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (ROM, read-only memory), a random access memory (RAM, random access memory), a magnetic disk, or an optical disc.

**Claims**

1. A memory pooling method, comprising:

   determining a first memory requirement of a first distributed application, wherein the first memory requirement indicates a memory size;
   determining N first server nodes in a server cluster based on the first memory requirement and an available memory resource of each server node in the server cluster, wherein N is an integer greater than or equal to 2;
   constructing a first memory pool based on the N first server nodes; and
   providing a service for the first distributed application based on the first memory pool.

2. The method according to claim 1, wherein the method further comprises:

   determining a type of the first distributed application; and
   the determining N first server nodes in a server cluster based on the first memory requirement and an available memory resource of each node in the server cluster comprises:
   determining the N first server nodes in the server cluster based on the first memory requirement, the type of the first distributed application, and the available memory resource of each node in the server cluster.

3. The method according to claim 2, wherein the method further comprises:

determining, based on the type of the first distributed application, a memory ballooning coefficient corresponding to the first distributed application; and

the determining the N first server nodes in the server cluster based on the first memory requirement, the type of the first distributed application, and the available memory resource of each node in the server cluster comprises:

determining the N first server nodes in the server cluster based on the first memory requirement, the memory ballooning coefficient corresponding to the first distributed application, and the available memory resource of each node in the server cluster.

4. The method according to claim 3, wherein the method further comprises:

determining a second memory requirement of a second distributed application and a type of the second distributed application; and

providing services for the second distributed application and the first distributed application respectively in different time periods based on the first memory pool when a difference between the second memory requirement and the first memory requirement is less than a preset value and the type of the first distributed application is the same as the type of the second distributed application.

5. A server cluster, comprising:

a determining unit, configured to determine a first memory requirement of a first distributed application, wherein the first memory requirement indicates a memory size; and

the determining unit is further configured to determine N server nodes in the server cluster based on the first memory requirement and an available memory resource of each node in the server cluster, wherein N is an integer greater than or equal to 2; and

a processing unit, configured to construct a first memory pool based on the N first server nodes, wherein

the processing unit is further configured to provide a service for the first distributed application based on the first memory pool.

6. The server cluster according to claim 5, wherein

the determining unit is further configured to determine a type of the first distributed application; and

the determining unit is specifically configured to determine the N first server nodes in the server cluster based on the first memory requirement, the type of the first distributed application, and the available memory resource of each node in the server cluster.

7. The server cluster according to claim 6, wherein

the determining unit is specifically configured to determine, based on the type of the first distributed application, a memory ballooning coefficient corresponding to the first distributed application; and

the determining unit is specifically configured to determine the N first server nodes in the server cluster based on the first memory requirement, the memory ballooning coefficient corresponding to the first distributed application, and the available memory resource of each node in the server cluster.

8. The server cluster according to claim 7, wherein

the determining unit is further configured to determine a second memory requirement of a second distributed application and a type of the second distributed application; and

the processing unit is further configured to provide services for the second distributed application and the first distributed application respectively in different time periods based on the first memory pool when a difference between the second memory requirement and the first memory requirement is less than a preset value and the type of the first distributed application is the same as the type of the second distributed application.

9. A server cluster, comprising a processor, wherein the processor is coupled to a memory, the memory is configured to store instructions, and when the instructions are executed by the processor, the server cluster is enabled to perform the method according to any one of claims 1 to 4.

10. A computer-readable storage medium, storing a computer program or instructions, wherein when the computer program or the instructions are executed, a computer is enabled to perform the method according to any one of claims 1 to 4.

Server cluster

| | | | |
|---|---|---|---|
| Server node 1 | Server node 2 | Server node 3 | Server node 4 |

Server node 5 | Server node 6

Distributed application

Server node 7 | Server node 8

⋮

FIG. 1

Determine a first memory requirement of a first distributed application — 201

↓

Determine N first server nodes in a server cluster based on the first memory requirement and an available memory resource of each server node in the server cluster — 202

↓

Construct a first memory pool based on the N first server node — 203

↓

Provide a service for the first distributed application based on the first memory pool — 204

FIG. 2a

Server cluster

| | |
|---|---|
| Server node 1 | Server node 2 |
| Server node 5 | Server node 6 |
| Server node 9 | |

First memory pool

Server node 3

Server node 4

Server node 7

Server node 8

⋮

FIG. 2b

Server cluster

Server node 1   Server node 2

Server node 5   Server node 6

Server node 9

First memory pool

Server node 3   Server node 4   Server node 4

Server node 7   Server node 8   Server node 8

Server node 3   Server node 4

Server node 7   Server node 8

Second memory pool

⋮

FIG. 3

Determine a first memory requirement of a first distributed application and a type of the first distributed application — 401

Determine N first server nodes in a server cluster based on the first memory requirement, the type of the first distributed application, and an available memory resource of each server node in the server cluster — 402

Construct a first memory pool based on the N first server node — 403

Provide a service for the first distributed application based on the first memory pool — 404

FIG. 4

```
                                                                    ┌─── 501
┌─────────────────────────────────────────────────┐   /
│        Determine a first memory requirement of a first        │
│  distributed application and a type of the first distributed  │
│                     application                  │
└─────────────────────────────────────────────────┘
                          │
                          ▼
                                                                    ┌─── 502
┌─────────────────────────────────────────────────┐   /
│  Determine N first server nodes in a server cluster based     │
│   on the first memory requirement, the type of the first      │
│      distributed application, and an available memory         │
│    resource of each server node in the server cluster         │
└─────────────────────────────────────────────────┘
                          │
                          ▼
                                                                    ┌─── 503
┌─────────────────────────────────────────────────┐   /
│      Construct a first memory pool based on the N first       │
│                     server node                  │
└─────────────────────────────────────────────────┘
                          │
                          ▼
                                                                    ┌─── 504
┌─────────────────────────────────────────────────┐   /
│      Provide a service for the first distributed application  │
│               based on the first memory pool     │
└─────────────────────────────────────────────────┘
                          │
                          ▼
                                                                    ┌─── 505
┌─────────────────────────────────────────────────┐   /
│     Determine a second memory requirement of a second         │
│        distributed application and a type of the second       │
│                distributed application           │
└─────────────────────────────────────────────────┘
                          │
                          ▼
                                                                    ┌─── 506
┌─────────────────────────────────────────────────┐   /
│  Provide services for the first distributed application and   │
│     the second distributed application respectively in        │
│  different time periods based on the first memory pool         │
└─────────────────────────────────────────────────┘
```

FIG. 5

600

601 602

Determining unit — Processing unit

FIG. 6

700

701 Central processing unit | Power supply 702

Memory 705

Wired or wireless network interface 703

Input/Output interface 704

FIG. 7

## INTERNATIONAL SEARCH REPORT

| International application No. |
|---|
| **PCT/CN2022/093194** |

**A.    CLASSIFICATION OF SUBJECT MATTER**

G06F 9/50(2006.01)i;  H04L 49/90(2022.01)i

According to International Patent Classification (IPC) or to both national classification and IPC

**B.    FIELDS SEARCHED**

Minimum documentation searched (classification system followed by classification symbols)

G06F; H04L

Documentation searched other than minimum documentation to the extent that such documents are included in the fields searched

Electronic data base consulted during the international search (name of data base and, where practicable, search terms used)

CNABS, CNTXT, VEN, ENTXT, WOTXT, EPTXT, CNKI, IEEE: 集群, 内存, 池, 共享, 共用, 分布式, 应用, 微服务, DAPP, cluster, memory, pool, share, distribute, application.

**C.    DOCUMENTS CONSIDERED TO BE RELEVANT**

| Category* | Citation of document, with indication, where appropriate, of the relevant passages | Relevant to claim No. |
|---|---|---|
| X | CN 106850849 A (LENOVO (BEIJING) LIMITED) 13 June 2017 (2017-06-13) description, paragraphs [0002]-[0132] | 1-10 |
| X | CN 107305506 A (ALIBABA GROUP HOLDING LIMITED) 31 October 2017 (2017-10-31) description, paragraphs [0002]-[0143] | 1-10 |
| A | CN 101158927 A (INSTITUTE OF COMPUTING TECHNOLOGY, CHINESE ACADEMY OF SCIENCES) 09 April 2008 (2008-04-09) entire document | 1-10 |
| A | US 2017262214 A1 (VENKATESH, C. et al.) 14 September 2017 (2017-09-14) entire document | 1-10 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 July 2022** | **20 July 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/093194**

| Patent document cited in search report | | | Publication date (day/month/year) | Patent family member(s) | | | Publication date (day/month/year) |
|---|---|---|---|---|---|---|---|
| CN | 106850849 | A | 13 June 2017 | None | | | |
| CN | 107305506 | A | 31 October 2017 | TW | 201738754 | A | 01 November 2017 |
| | | | | WO | 2017181853 | A1 | 26 October 2017 |
| CN | 101158927 | A | 09 April 2008 | CN | 100489815 | C | 20 May 2009 |
| US | 2017262214 | A1 | 14 September 2017 | WO | 2015123225 | A1 | 20 August 2015 |
| | | | | US | 10599356 | B2 | 24 March 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111007559

- CN 202110661538